# EUROPEAN PATENT SPECIFICATION

(11) **EP 0 446 902 B1**
(45) Date of publication and mention of the grant of the patent: **06.03.1996**
(21) Application number: 91103852.9
(22) Date of filing: 13.03.1991
(51) Int. Cl.: G05D 1/02

(54) **Automatic travelling apparatus**
Gerät zum automatischen Fahren
Appareil mobile automatique

(30) Priority: 15.03.1990 JP 64586/90
(43) Date of publication of application: 18.09.1991
(73) Proprietor: HONDA GIKEN KOGYO KABUSHIKI KAISHA, Minato-ku, Tokyo (JP)
(72) Inventor: Ishida, Shinnosuke, c/o K.K. Honda, Wako-shi, Saitama (JP)
(74) Representative: Prechtel, Jörg, Dipl.-Phys. Dr.

(56) References cited:
- EP-A- 0 230 480
- EP-A- 0 366 350
- DE-A- 3 541 969
- DE-A- 3 626 208
- DE-A- 3 820 589
- US-A- 4 942 538

## Description

The present invention relates to an automatic travelling apparatus according to the preamble part of Claim 1. Such an automatic travelling apparatus is eg. known from the EP-A-0 354 361.

The known apparatus is intended to continuously take an image of an area ahead of a vehicle in its running direction by an image pick-up device attached to the vehicle; make sampling of the image thus taken and data processing for extracting therefrom continuous line segments such as road edges; determine a a permissible travelling area ahead of the vehicle on the basis of the extracted continuous line segments; set a target course in the determined permissible travelling area; estimate a steering amount necessary for following the target course on the basis of the currently detected running condition of the vehicle; and steer the vehicle to follow the target course with reference to the steering amount.

Since the above-mentioned automatic travelling apparatus performs the steering control of the vehicle at an interval of image sampling period and with reference to the steering amount necessary for following the target course, which is estimated from the present running condition, the steering control may be more accurate as the sampling period i.e., steering control cycle is shorter.

However, in case that each image data processing, from image data sampling to determination of a permissible travelling area for each control cycle, is performed by a microcomputer or like means, it may take rather long time because an image of an ground area ahead of the vehicle may be complicated and includes a large amount of information to be processed. Therefore, saving of the control cycle time may be imited.

The time required for processing each image and finally determining a permissible travelling area is fairly longer in comparison with the processing time for steering vehicle to follow the target course set in the permissible travelling area. For example, the image processing time is 500 milliseconds whereas the processing time for steering control is 10 milliseconds.

If the image processing time is extended, the vehicle may travel enough to produce a deviation of its actual position with respect to the determined permissible travelling area, i.e., higher running speed brings larger deviation, causing a considerable decrease in accuracy of the steering control.

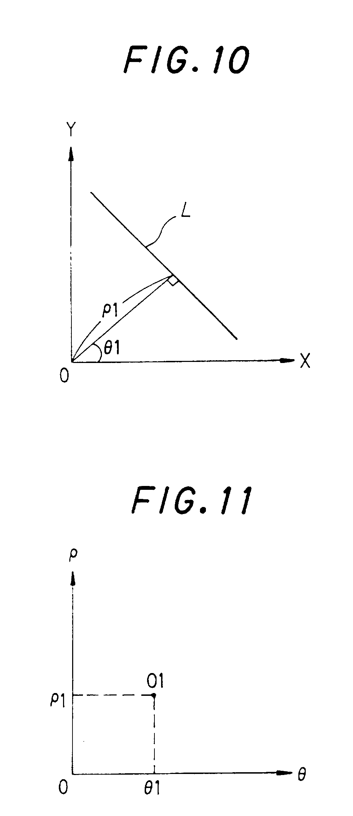

From DE 38 20 589 A1 an automatic travelling apparatus is known, which corresponds, with respect to features of interest, essentially to the known automatic travelling apparatus corresponding to the preamble part of claim 1, discussed in the foregoing. From figure 10 of DE 38 20 589 A1, it may clearly be derived that there is only one control cycle for image processing (step 1001 of fig. 10) and steering control (steps 1004 and 1005), the steering amount therefore being estimated only once during each period of image sampling. Therefore, this automatic travelling apparatus has essentially the same drawbacks as the automatic travelling apparatus as discussed in the foregoing, i.e. that the accuracy of the steering control is limited because of the rather long image sampling period. For higher running speed this can result in larger deviations of the vehicle from the target course.

The EP 0 273 976 A1 discloses an automatic travelling apparatus designed for following a fixed course. On The basis of data output by a movement length detector and a direction detector, the apparatus determines its coordinate position and posture with respect to the fixed course by dead-reckoning (referred to as speculation navigation) and compares the "speculated" coordinate data with predetermined target coordinate data with respect to the fixed course. If the difference between the speculated coordinate data and the target coordinate data is higher than a respective threshold, the rotational speed of the driving wheels is altered according to a predetermined formula, whereby the rotational speed of one wheel increases by the amount ΔV, whereas the rotational speed of the other wheel decreases by the amount ΔV. This scheme of controlling a vehicle along a fixed course corresponds to a sort of closed-loop control.

To correct errors with respect to the speculated position and posture of the vehicle, visual recognizing means comprising, for example, a TV-camera, are provided, which allow the estimation of the true coordinates on the basis of ground marks besides or on the fixed course of the vehicle.

The coordinate data obtained by visual recognition serve for correcting the speculated coordinate data for directly correcting the position of the vehicle with respect to the fixed course. The position of the vehicle is corrected by the motors M_{R} and M_{L} correspondingly. A smooth overall course of the vehicle is not to be expected.

There is no disclosure of any means for determining a permissible travelling area ahead of the vehicle, or for setting or resetting a target course in the permissible travelling area. There are also no means for estimation of a steering amount on the basis of the instantaneous running conditions. The amount ΔV only depends on the target coordinate data and the speculated coordinate data.

Thus, the guiding of the vehicle along the fixed course and the correction of its position using the visual recognizing means are effected alternately, with the position correction apparently being effected each time the vehicle approaches a ground mark proximately

Accordingly, the fixed target course is defined by a series of target displacement dᵢ and target declination angles ϕᵢ referring to positions Pᵢ, which apparently are the positions of respective ground marks, where the fixed target course changes with respect to a reference passage constituted by line sections connecting the ground marks.

It is an object of the invention to provide an automatic travelling apparatus, which is capable of smoothly and accurately following a target course set in a permissible travelling area, which target course is set by the automatic travelling apparatus and which permissible travelling area is determined by the automatic travelling apparatus. It is a particular object of the invention to provide an automatic travelling apparatus in which the accuracy of the steering control is high enough, so that it is not necessary to intermittently correct the position and posture of the moving vehicle.

This object is achieved by the automatic travelling apparatus of the invention having the features of claim 1.

According to the invention, the duration of the image sampling period does not limit the accuracy of the steering control, since the steering amount is repeatedly newly estimated during a period of image sampling on the basis of the Instantaneous running condition and on the renewed vehicle position, permitting the vehicle to follow the target course smoothly and accurately. If necessary, for example in case of a deviation of the vehicle with respect to the target course, the target course is reset in the permissible travelling area instead of correcting the position and/or posture of the vehicle. This measure allows the vehicle to follow a smooth overall course in the permissible travelling area since the vehicle is not forced back on the old target course once having set in the permissible travelling area.

However, normally only minor deviations of the vehicle from the actual target course should occur since the steering amount is always estimated on basis of the instantaneous running conditions. This guarantees that the vehicle follows the target course smoothly for a wide range of instantaneous running conditions and target course curvatures. There is no mere comparison of an instantaneous position and posture with a target position and posture, but a comparison of a presumed course corresponding to the instantaneous running conditions with the target course. The presumed course is a course the vehicle would follow if no steering action were effected, and in partcular, the curvature of this presumed course strongly depends on the instantaneous running conditions, such as vehicle velocity and yaw rate. To remain on the target course, for example, the necessary steering amount will be different for high or low velocity of the vehicle.

### BRIEF DESCRIPTION OF DRAWINGS

Fig. 1 is a block diagram showing a structure of an automatic travelling apparatus embodying the present invention.

Fig. 2 shows a line segment of a road obtained on the basis of processing an image taken by a video camera.

Fig. 3 shows an image obtained by projective transformation of the image shown in Fig. 2.

Fig. 4 shows an example of a target course set in a permissible area within a road width.

Figs. 5 (a) and 5 (b) show target courses set on a road which a vehicle is to travel at a low speed (a) and a high speed (b) respectively.

Fig. 6 shows a relationship between a target course and a presumed course.

Fig. 7 shows a relationship between a vehicle's steering angle and its turning radius.

Fig. 8 shows a travelling state of a vehicle in a permissible travelling area.

Fig. 9 (a) shows a position and a running direction of a vehicle in a permissible travelling area at a certain time.

Fig. 9 (b) shows a state obtained by coordinate transformation of a permissible travelling area in relation to a position and a running direction of a vehicle in a permissible travelling area.

Fig. 10 shows a line segment in the X-Y coordinates.

Fig. 11 shows a point on the ρ-Θ point coordinates obtained by the Hough conversion of the line segment shown in Fig. 10.

Fig. 12 shows timings of processings in one control cycle.

Fig. 13 shows a flow chart of image processing.

Fig. 14 shows a flow chart of updating the vehicle position during image sampling.

In the drawings, 1 is an image pick-up device, 2 an image processor, 3 a means for determining a permissible travelling area, 4 a means for setting a target course, 5 a controlling means, 6 a running speed sensor, 7 a Yaw rate sensor, 8 a steering angle sensor, 9 a steering controller,
10 a steering drive, 11 a vehicle. Characters RA, RA' denote permissible travelling areas and characters OC, OC' denote target courses.

### DESCRIPTION OF THE PREFERRED EMBODIMENTS

Referring now to the drawings, a preferred embodiment of the present invention will be described in detail as follows:

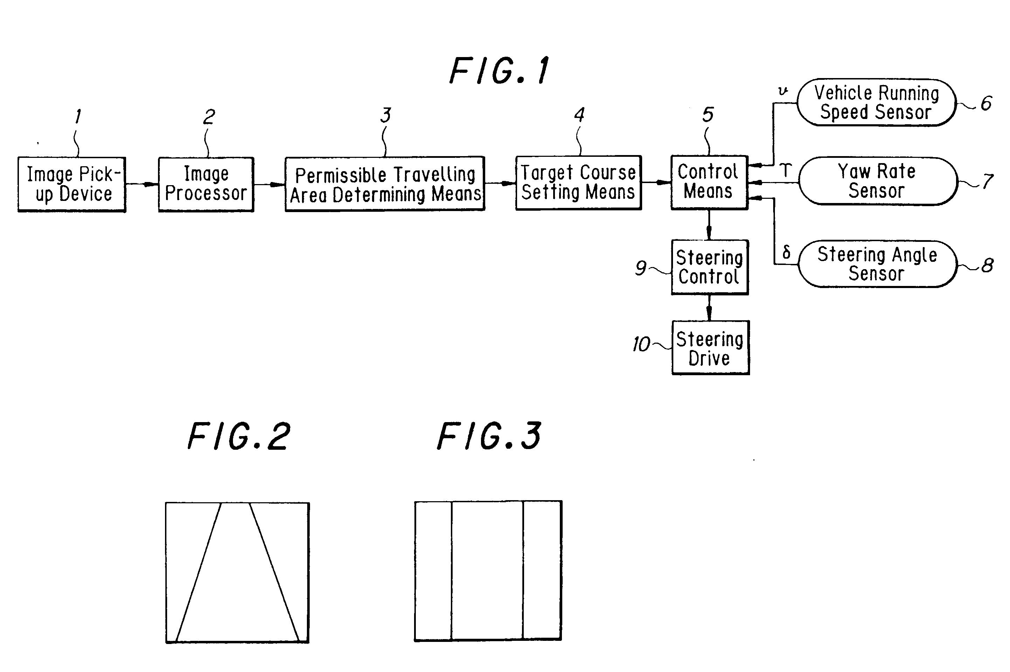

It will be observed from Fig. 1 that an automatic travelling apparatus according to the present invention comprises: an image pick-up device 1 such as a video camera attached to a vehicle for continuously picking up subsequent images of ground ahead of the vehicle; means 2 for processing the images taken by the image pick-up device 1 to extract therefrom segments of continuous lines such as road edges and the like; means 3 for determining, on the basis of the obtained continuous line segments, a permissible travelling area such as a road in the direction in which the vehicle is to travel; means 4 for setting a target course in the permissible travelling area thus determined; means 5 for determining the instantaneous running condition of the vehicle on the basis of an output signal from a speed sensor 6 representing the vehicle's running speed "v", an output signal from a jaw rate sensor 7 representing the yaw rate "γ" and an output signal from a steering angle sensor 8 representing the tire angle "δ" which varies with the steering of the vehicle, and for estimating, on the basis of the instantaneous running condition, a steering amount to permit the vehicle to follow the target course; and means 9 (and a steering drive 10) for steering the vehicle with reference to the steering amount.

Actually, a microcomputer aided control is used in place of means 2, 3, 4 and 5, and means 9 can be included in the microcomputer aided control, if occasions demand.

The extraction of continuous line segments such as road edges from the takeb image in the image processing means 2 can be made as follows:

First, each image supplied from the image pick-up device 1 is subjected to differentiation process for detection of the road edges. Then, an automatic threshold setting circuit in the image processing means 2 sets an optimum threshold value in consideration of the degree of shade of the road edge image information just processed. The road edge image will be subjected to binary transformation.

Alternately, first, the images may be subjected to binary transformation, and then the binary data may be subjected to differentiation. In place of binary transformation poly-digitization may be performed to express some shade details of image.

Digitalized image information will be subjected to the Hough conversion to convert the X-Y linear coordinates to the corresponding ρ-θ point coordinates, thus eliminating isolated points and plotting to provide a continuous line segments of the road edges as shown in Fig. 2.

θ stands for an angle formed between the X-axis and a perpendicular from the origin of the X-Y coordinates to a line segment, whereas ρ stands for the length of the normal line. For instance, the line L in the X-Y coordinates in Fig. 10 is expressed as the point 01 in the ρ-θ point coordinates in Fig. 11.

On that occasion, edge tracing may be performed on the basis of binary-coded image information to obtain a continuous road edge. The Hough conversion, edge tracing and other appropriate processings may be performed simultaneously, and then synthetic judgement may be made on the results of these processings to obtain a precise road edge information. More accurate road edge information may be taken out when the above-mentioned image processings are made with developing an input image area as the vehicle travels.

The image taken by a video camera represents a perspective view. The perspective road edge image as shown in Fig. 2 can be converted to non-perspective road edge image as shown in Fig. 3 according to the known projective conversion process.

The permissible travelling area determining means 3 has a projective conversion characteristics set in consideration of the perspective characteristics of associated video cameras.

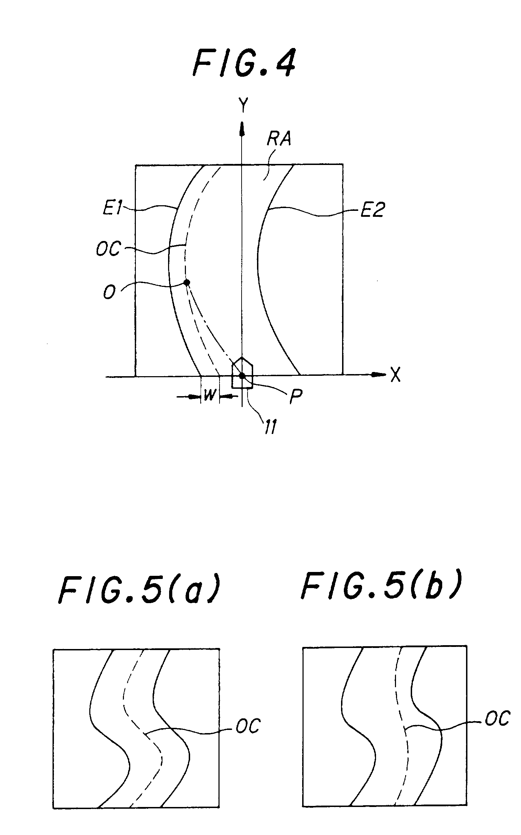

The permissible travelling area determining means 3 can determine, on the basis of the non-perspective road image obtained by projective conversion, for instance, an area between the continuous road edges E1 and E2 shown in Fig. 4 as a permissible travelling area RA in the X-Y coordinates wherein the Y-axis corresponds to the direction in which the image is pictured by the image pick-up device 1, i.e., the vehicle travels.

In Fig. 4, a current or instantaneous position of the vehicle 11 is indicated at a point "P", and the video camera of the image pick-up device 1 is mounted at a predetermined position on the vehicle whereat the point "P" may appear at the center lower point of the display screen as the origin of the X-Y coordinates.

After a permissible travelling area is determined by the permissible travelling area determining means 3, the target course setting means 4 will select a course most appropriate for running in the permissible travelling area, and will set the so selected course as a target course to follow.

Preferably, the course may be determined in consideration of the road contour and the running speed of the vehicle to meet the instantaneous travelling condition of the vehicle. However, the course may be basically determined in the width of the road as follows:

In case that the target course setting means 4 finds that the width of the road is above a predetermined extent, and that vehicles must keep to the left, a target course OC will be set a given constant distance "w" (for instance, 1.5 meters) apart from the left edge of the road, as shown in Fig. 4.

In case that the width of the road is below the predetermined extent, a target course will be set along the center line (not shown) of the road.

The coordinates of the target course are stored in the memories of the target course setting means 4 and are continuously renewed as the vehicle is running. The divisions of the X-Y coordinates for the permissible travelling area and the target course are selected in compliance with the magnification of the video camera of the image pick-up device 1.

In Fig. 4, the trace of the vehicle from "P" to "0" represents the course actually followed by the vehicle under the control of the control means 5 until the vehicle has come to the target course OC at the point 0.

According to the present invention, it is also possible to set a target course in consideration of the running condition of the vehicle as follows:

In case that the target course setting means 4 finds that the running speed measured by the speed sensor 6 is below a predetermined speed, the target course OC will be set in conformity with the road contour as seen from Fig. 4.

When the running speed of the vehicle is higher than a predetermined speed, and when the vehicle is running a curved road as shown in Fig. 5(b), a target course OC of reduced curvature is set so as to reduce the lateral force which is applied to the vehicle.

After setting a target course in the road, the control means 5 will estimate a steering amount to permit the vehicle to follow the target course as follows:

When the steering amount relates to a steering angle of the vehicle, the control means 5 presumes a course which the vehicle will run along on the basis of the currently detected running condition; calculates a deviation of the presumed running course from the target course; determines an amount of steering angle to be corrected for bringing the vehicle to follow the target course; and then makes the steering control of the vehicle according to the steering amount, i.e., the steering angle for correction.

In practice, for example, the position whereto the vehicle will attain is presumed as a point on the X-Y coordinates having the Y-axis representing the running direction of the vehicle and the lateral deviation of the presumed point from the point of target position is measured to finally determine therefrom a corresponding amount of steering angle to be corrected.

Now it is assumed that a vehicle 11 at Point "P" is controlled to get on the target course OC.

First, the distance L (m) (L= v x T) on the Y-axis which the vehicle can run in T seconds will be determined on the basis of the vehicle's running speed v (m/s) which is determined by the speed sensor. Then, the lateral deviation xℓ from Point "C" (on which the vehicle would be in T seconds if it travelled straight along the Y-axis by the distance L) to the target course OC will be estimated.

Second, the course AC which the vehicle is supposed to follow will be estimated from the yaw rate γ (rad/sec), and then the lateral deviation xm from Point "C" to the presumed course AC will be estimated by the following equation:${\text{xm = R - {R}}^{\text{2}} {\text{- (v X tm)}}^{\text{2}} {\text{}}}^{\text{1/2}} {\text{= R - R {1 -(v X tm/R)}}^{\text{2}} {\text{}}}^{\text{1/2}}$ where R stands for a radius of the presumed course AC.

When R >> v X tm, we obtain${\text{xm ≒ R - R {1 - (v X tm/R)}}^{\text{2}} \text{/2}} {\text{= v}}^{\text{2}} {\text{X tm}}^{\text{2}} \text{/2R} {\text{= L}}^{\text{2}} \text{/2R}$$\text{γ = v / R}$

From Equations (1) and (2)${\text{xm = L}}^{\text{2}} \text{γ / 2v}$

The positive sign of yaw rate γ represents that the presumed course AC turns to the left whereas the negative sign indicates the presumed course turning to the right.

The yaw rate Δγ to which the yaw rate of the vehicle is to be corrected will be determined from the following equation:${\text{Δγ = e X 2v / L}}^{\text{2}}$

Then, on the basis of the tire angle δ detected at Point "P" by the steering angle sensor 8, the steering amount δ' for permitting the vehicle to get on the target course OC can be determined as follows:

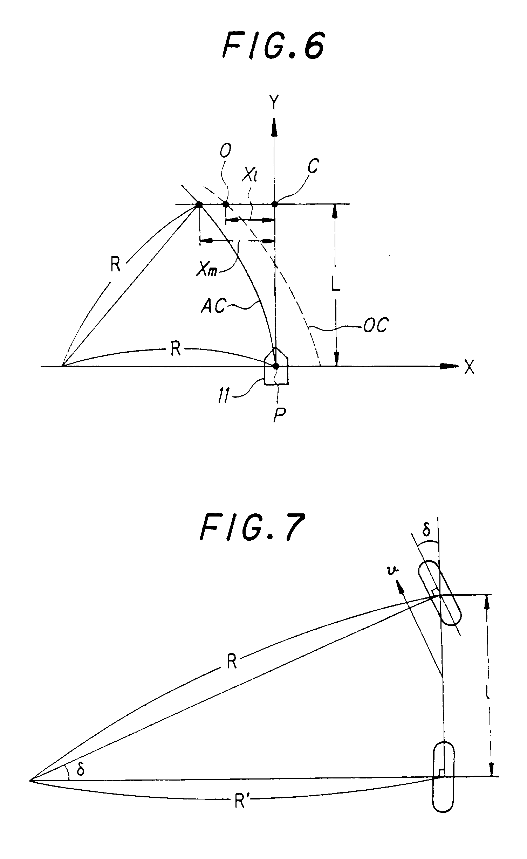

Referring to Fig. 7, when R >> ℓ, the following equation can be obtained:$\text{δ = ℓ / R}$

From equations (2) and (5) we can derive$\text{δ = ( ℓ / v ) γ}$ where ℓ stands for a wheelbase. According to the equation (6) the tire angle Δδ for correction in accordance with the yaw rate Δγ to be corrected can be given by the following equation:$\text{Δδ = ( ℓ / v) Δγ}$ In consideration of an usual equation of steering angle in relation to the running speed, i.e., substituting ℓ=(1+Kv) into the equation (7), we can obtain${\text{Δδ = Δγ { ℓ (1 + Kv}}^{\text{2}} \text{) / v )}$ where "K" is a constant which is determined both from the tyre characteristics and the vehicle characteristics.

Therefore, a steering amount δ' for permitting the vehicle to get on the target course can be obtained by the following equation:$\text{δ' = δ + Δδ}$

In response to the steering amount δ' given from the control means 5 the steering control means 9 issues a drive command to the steering drive 10 which in turn steers the vehicle toward the target course OC.

The above-mentioned processing operations will be repeated at intervals of a specified control cycle including the time required for operations, thereby the steering control of the vehicle may be continuously performed to permit the vehicle to follow the target course OC set in the permissible travelling area which is successively renewable at every control cycle.

The automatic travelling apparatus according to the present invention further includes means for renewing the vehicle position relative to the permissible travelling area currently fixed for a current control cycle on the basis of the instantaneous running condition of the vehicle, and means for resetting the target course for the renewed vehicle position in relation to the currently fixed permissible travelling area, and may determine a steering amount for permitting the vehicle to follow the the reset target course.

The above-mentioned means is practically included in the control means 5 shown in Fig. 1.

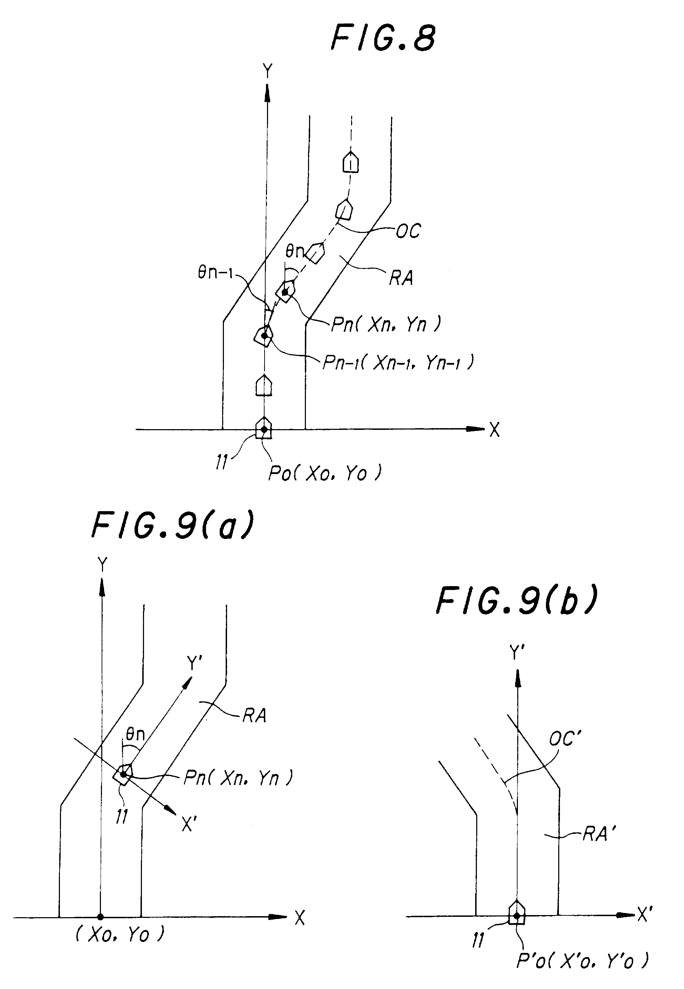

In case that a permissible travelling area RA is established for one control cycle in the X-Y coordinates and a vehicle 11 is positioned at Point P (Xo, Yo), i.e., at the origin of the X-Y coordinates at the beginning of said control cycle as shown in Fig. 8, the vehicle position Pn (Xn, Yn) (n =1, 2, 3, ...) in X-Y coordinates, which varies with time as the vehicle runs, is estimated from the running speed "v" and the yaw rate "γ" (i.e. angular velocity increment in yawing direction) which are detected respectively by a running speed sensor 6 and a yaw rate sensor 7 at an interval of an unit time Δt preset shorter than the image processing time, and thereby said position may be renewed successively in relation to the permissible travelling area RA. In Fig. 8, "OC" designates a target course set at an initial stage of the control cycle. 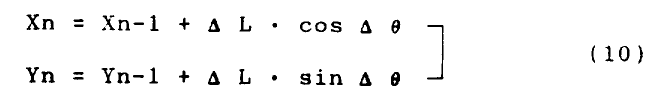 where ΔL is a distance which the vehicle travels for an unit time and can be determined by the following equation:$\text{ΔL = v · Δt}$

Δθ (= θn - θn-1) is an change of the vehicle running direction for the unit time, which is determined by the detected value of yaw rate γ as follows:$\text{Δθ = γ · Δ t}$

The target course for the renewed position Pn (Xn, Yn) of the vehicle is reset in respect to the permissible travelling area RA, a steering amount is also estimated with respect to the reset target course so as to steer the vehicle toward the target course.

As shown in Figs. 9(a) and 9(b), a new X'-Y' coordinate system in which the Y'-axis stands for the axis of running direction of the vehicle 11 at the renewed position Pn is formed, and then coordinate transformation of every points of the permissible travelling area RA' and the target course OC'is carried out in such a way that the renewed point Pn (Xn, Yn) in the X-Y coordinates may be placed to the origin Po' (X', Y').

Namely, every points shown in Fig. 9(a) are shifted respectively by (-ΔL·cosΔθ, -ΔL·sinΔθ) and the permissible travelling area pattern RA and the target course pattern OC are turned respectively by -Δθ, with the result that the axis of the vehicle running direction coincides with the Y'-axis of the X'-Y' coordinates and the vehicle 11 is positioned at the origin of said coordinates.

Then, a steering amount for permitting the vehicle 11 to follow the target course OC' is determined with reference to the X'-Y' coordinates in the same manner as mentioned above, and the steering control will be performed with reference to said renewed steering amount.

The steering amount for permitting the vehicle to follow the target course OC initially set in the permissible travelling area RA was estimated from the variable data as afore mentioned.

Accordingly, in case of steering the vehicle 11 from the initial position Po with the initially estimated steering amount for a relatively long time of the control cycle the vehicle may progressively deviate from the target course OC due to the error included in the steering amount estimation.

The present invention provides such a possibility that in one control cycle a target course OC' can be reset in a permissible travelling area RA' viewed from the vehicle's present position Pn to be successively renewed at intervals of relatively shorter period and be treated in preference to the preceding and, therefore, the steering control of the vehicle 11 can be carried out with a higher accuracy according to the steering amount newly estimated for the reset target course. Since the interval between renewals of the steering amount is relatively short, the error of estimation may have no practical influence to the steering control.

According to the present invention, it is also possible to optimally change the target course with a change of the vehicle running speed in one control cycle in case the target course is set in a permissible travelling area depending on the vehicle's running speed as shown in Figs. 5(a) and 5(b).

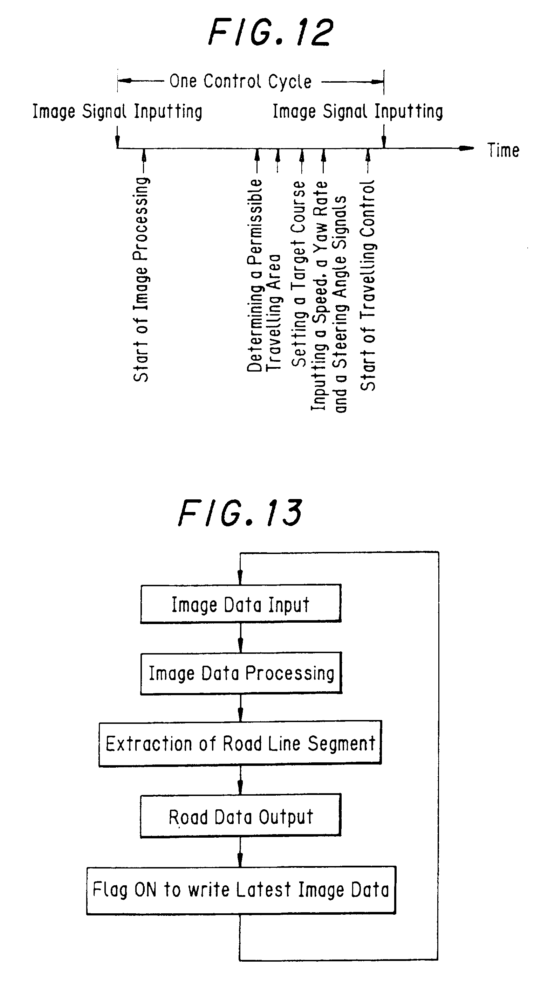

Fig. 12 is a timing chart showing each processing timing in one control cycle.

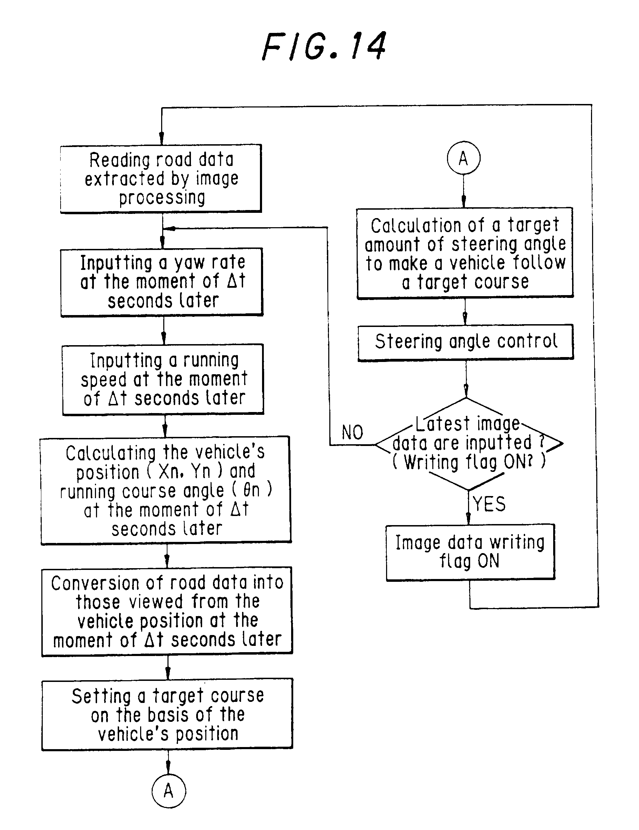

Fig. 13 shows a flow of image processing, and Fig. 14 shows a flow of renewing the vehicle position during the image processing.

As be apparent from the foregoing description, the automatic travelling apparatus according to the present invention offers such an advantage that in each steering control cycle comprising steps - sampling an image of an area ahead of a running vehicle (said image being taken by the image pick-up means attached to the vehicle); processing sampled data and extracting therefrom continuous line segments; determining a permissible travelling area ahead of the vehicle on the basis of the continuous line segments extracted; setting a target course in the permissible travelling area thus determined; detecting the instantaneous running condition of the vehicle; estimating, on the basis of the instantaneous running condition, a steering amount to permit the vehicle to follow the target course; and steering the vehicle with reference to the steering amount, it can renew, on the basis of the instantaneous running condition during a period of image sampling, the preceding position of the vehicle in the determined permissible travelling area and reset a target course in the permissible travelling area in relation to the renewed position, thereby the image sampling period, i.e., the steering control cycle can be shortened apparently to increase the steering control accuracy and furthermore the steering control can be carried out at constant intervals irrespective of possible variations ofimage processing period.

The invention as described above can be summarized as follows:

Disclosed is an automatic travelling apparatus which is capable of taking an image of an area ahead of a vehicle by an image pick-up means attached to the vehicle; sampling and processing the image data to extract therefrom continuous line segments; determining a permissible travelling area ahead of the vehicle on the basis of the continuous line segments extracted; setting a target course in the permissible travelling area thus determined; detecting the instantaneous running condition of the vehicle; estimating, on the basis of the instantaneous running condition, a steering amount to permit the vehicle to follow the target course; and steering the vehicle with reference to the steering amount, and furthermore of renewing, on the basis of the instantaneous running condition during a period of image sampling, the preceding position of the vehicle in the permissible travelling area and reset a target course in the permissible travelling area in relation to the renewed position.

## Claims

1. An automatic travelling apparatus comprising:
means (1) for picking-up an image of an area ahead of a running vehicle by an image pick-up device (1) attached to the vehicle;
means (2) for sampling the image taken by the image pick-up device (1), processing sampled data and extracting therefrom continuous line segments;
means (3) for determining a permissible travelling area ahead of the vehicle on the basis of the continuous line segments extracted;
means (4) for setting a target course (OC) in the permissible travelling area thus determined;
means (6,7,8) for detecting the instantaneous running condition (v,γ) of the vehicle;
means (5) for estimating, on the basis of the instantaneous running condition (v,γ) , a steering amount (δ) to permit the vehicle to follow the target course (OC); and
means (9,10) for steering the vehicle with reference to the steering amount,
characterized in that means (5) for renewing, on the basis of the instantaneous running condition (v,γ) during a period of image sampling, the preceding position of the vehicle in the currently recognized permissible travelling area and means (4,5) for resetting a target course (OC') in the permissible travelling area in relation to the renewed position are provided, whereby the steering amount (δ) is repeatedly newly estimated on basis of the instantaneous running condition (v,γ) during a period of image sampling to permit the vehicle to follow the target course.

2. An automatic travelling apparatus as claimed in claim 1, characterized in that the instantaneous running condition of the vehicle is represented by its yaw rate (γ) and a running speed (v).

3. An automatic travelling apparatus as claimed in claim 1, characterized in that the steering amount (δ) is a steering angle.

4. An automatic travelling apparatus according to one of the preceding claims, characterized in that the target course (OC,OC') is set on basis of the road contour and of the running speed (v) of the vehicle.

5. An automatic travelling apparatus according to claim 4, characterized in that the target course (OC,OC') is set in conformity with the road contour for a running speed (v) below a predetermined speed, and that a target course (OC) with reduced curvature is set for a running speed (v) above a predetermined speed.

6. An automatic travelling apparatus according to one of the preceding claims, wherein a target course (OC,OC') is set close to the left edge of a relatively wide road on which the vehicle is about to run, whereas a target course (OC) is set on the center of a relatively narrow road on which the vehicle is about to run.

7. An automatic travelling apparatus according to one of claims 4 - 6, characterized in that the target course (OC,OC') is changed during one period of image sampling with a change of the running speed (v).

8. An automatic travelling apparatus according to one of the preceding claims, characterized in that the steering control is carried out at constant time intervals, irrespective of the duration of the period of image sampling.

## Patentansprüche

1. Automatische Fahrvorrichtung, umfassend:
Mittel (1) zur Aufnahme eines Bildes eines Bereiches vor einem fahrenden Fahrzeug durch eine Bildaufnahmevorrichtung (1), die an dem Fahrzeug angebracht ist;
Mittel (2) zum Abtasten des durch die Bildaufnahmevorrichtung (1) aufgenommenen Bildes, zum Verarbeiten der abgetasteten Daten und zum Extrahieren von durchgehenden Liniensegmenten aus diesen;
Mittel (3) zum Bestimmen eines zulässigen Fahrbereichs vor dem Fahrzeug auf der Grundlage der extrahierten durchgehenden Liniensegmente;
Mittel (4) zum Festsetzen eines Zielkurses (OC) in dem derart bestimmten zulässigen Fahrbereich;
Mittel (6, 7, 8) zum Erfassen des momentanen Fahrzustandes (v, γ) des Fahrzeugs;
Mittel (5) zum Bestimmen - auf der Grundlage des momentanen Fahrzustandes (v, γ) - eines Lenkwerts (δ), um zu ermöglichen, daß das Fahrzeug dem Zielkurs (OC) folgt; und
Mittel (9, 10) zum Lenken des Fahrzeugs bezüglich des Lenkwerts,
dadurch gekennzeichnet, daß Mittel (5) zur Aktualisierung - auf der Grundlage des momentanen Fahrzustandes (v, γ) während einer Bildabtastperiode - der vorausgehenden Position des Fahrzeugs in dem gegenwärtig erkannten zulässigen Fahrbereich und Mittel (4, 5) zur Neufestsetzung eines Zielkurses (OC') im zulässigen Fahrbereich bezüglich der aktualisierten Position vorgesehen sind, wodurch der Lenkwert (δ) während einer Bildabtastperiode auf der Grundlage des momentanen Fahrzustandes (v, γ) wiederholt neu bestimmt wird, um zu ermöglichen, daß das Fahrzeug dem Zielkurs folgt.

2. Automatische Fahrvorrichtung nach Anspruch 1, dadurch gekennzeichnet, daß der momentane Fahrzustand des Fahrzeugs durch dessen Gierrate (γ) und eine Fahrgeschwindigkeit (v) repräsentiert ist.

3. Automatische Fahrvorrichtung nach Anspruch 1, dadurch gekennzeichnet, daß der Lenkwert (δ) ein Lenkwinkel ist.

4. Automatische Fahrvorrichtung nach einem der vorhergehenden Ansprüche, dadurch gekennzeichnet, daß der Zielkurs (OC, OC') auf der Grundlage der Straßenkontur und der Fahrgeschwindigkeit (v) des Fahrzeugs festgesetzt wird.

5. Automatische Fahrvorrichtung nach Anspruch 4, dadurch gekennzeichnet, daß für eine Fahrgeschwindigkeit (v) kleiner als eine vorbestimmte Geschwindigkeit der Zielkurs (OC, OC') in Übereinstimmung mit der Straßenkontur festgesetzt wird, und daß für eine Fahrgeschwindigkeit (v) größer als eine vorbestimmte Geschwindigkeit ein Zielkurs (OC) mit verminderter Krümmung festgesetzt wird.

6. Automatische Fahrvorrichtung nach einem der vorhergehenden Ansprüche, bei der ein Zielkurs (OC, OC') nahe dem linken Rand einer relativ breiten Straße festgesetzt wird, auf der das Fahrzeug im Begriff steht zu fahren, wohingegen ein Zielkurs (OC) in der Mitte einer relativ schmalen Straße festgesetzt wird, auf der das Fahrzeug im Begriff steht zu fahren.

7. Automatische Fahrvorrichtung nach einem der Ansprüche 4 bis 6, dadurch gekennzeichnet, daß der Zielkurs (OC, OC') während einer Bildabtastperiode mit einer Änderung der Fahrgeschwindigkeit (v) geändert wird.

8. Automatische Fahrvorrichtung nach einem der vorhergehenden Ansprüche, dadurch gekennzeichnet, daß die Lenksteuerung ungeachtet der Dauer der Bildabtastperiode in konstanten Zeitabständen durchgeführt wird.

## Revendications

1. Appareil mobile automatique comportant :
un moyen (1) de prise de vue d'une zone située à l'avant d'un véhicule roulant, avec un dispositif de prise de vue (1) fixé au véhicule ;
un moyen (2) pour échantillonner l'image recueillie par le dispositif de prise de vue (1) et pour traiter des données échantillonnées et en extraire des segments linéaires continus ;
un moyen (3) pour déterminer une zone de circulation admissible située à l'avant du véhicule sur la base des segments linéaires continus extraits ;
un moyen (4) pour établir un parcours cible (OC) dans la zone de circulation admissible ainsi déterminée ;
des moyens (6, 7, 8) pour détecter la condition de roulage instantané (v, γ) du véhicule ;
un moyen (5) pour estimer sur la base de la condition de roulage instantanée (v, γ), une étendue de virage (δ) pour permettre au véhicule de suivre le parcours cible (OC) ; et
un moyen (9, 10) pour faire virer le véhicule selon l'étendue du virage, caractérisé par le fait qu'il comporte un moyen (5) pour renouveler, sur la base de la condition instantanée de roulage (v, γ), au cours de la période d'échantillonnage d'images, la position précédente du véhicule dans la zone de circulation admissible couramment reconnue et un moyen (4, 5) pour établir un nouveau parcours cible (OC') dans la zone de circulation admissible en fonction de la position renouvelée, grâce à quoi l'estimation de l'étendue du virage (δ) est renouvelée de façon répétée sur la base de la condition instantanée de roulage (v, γ) au cours d'une période d'échantillonnage d'images pour permettre au véhicule de suivre le parcours cible.

2. Appareil mobile automatique selon la revendication 1, caractérisé en ce que la condition instantanée de roulage du véhicule est représentée par sa vitesse de lacet (γ) et par une vitesse de roulage (v).

3. Appareil mobile automatique selon la revendication 1, caractérisé en ce que l'étendue du virage (δ) est un angle de virage.

4. Appareil mobile automatique selon l'une des revendications précédentes, caractérisé en ce que le parcours cible (OC, OC') est établi en fonction du contour de la route et de la vitesse de roulage (v) du véhicule.

5. Appareil mobile automatique selon la revendication 4, caractérisé en ce que le parcours cible (OC, OC') est établi en conformité avec le contour de la route pour une vitesse de roulage (v) inférieure à une vitesse prédéterminée et en ce qu'un parcours cible (OC ) à courbure réduite est établi pour une vitesse de roulage (v) supérieure à une vitesse prédéterminée.

6. Appareil mobile automatique selon l'une des revendications précédentes, dans lequel un parcours cible (OC, OC') est établi au voisinage du bord de gauche d'une route relativement large sur laquelle le véhicule est sur le point de rouler, alors qu'un parcours cible (OC) est établi sur la partie centrale d'une route relativement étroite sur laquelle le véhicule est sur le point de rouler.

7. Appareil mobile automatique selon l'une des revendications 4 à 6, caractérisé en ce qu'on fait varier le parcours cible (OC, OC' ) au cours d'une période d'échantillonnage d'images lorsque la vitesse de roulage (v) varie.

8. Appareil mobile automatique selon l'une des revendications précédentes, caractérisé en ce que la commande de direction est effectuée à des intervalles de temps constants, indépendamment de la durée de la période d'échantillonnage d'images.
